# EUROPEAN PATENT SPECIFICATION

(11) **EP 3 702 914 B1**
(45) Date of publication and mention of the grant of the patent: **01.05.2024**
(21) Application number: 20171180.1
(22) Date of filing: 16.03.2009
(51) Int. Cl.: G06F 9/451, G06T 19/00, G06Q 50/00, G06F 3/048, G06F 3/01

(54) **MOBILE VIRTUAL AND AUGMENTED REALITY SYSTEM**
MOBILES SYSTEM FÜR VIRTUELLE UND ERWEITERTE REALITÄT
SYSTÈME MOBILE DE RÉALITÉ VIRTUELLE ET AUGMENTÉE

(30) Priority: 20.03.2008 US 51969
(43) Date of publication of application: 02.09.2020
(62) Divisional of application: 09723170.8
(73) Proprietor: Google Technology Holdings LLC, Mountain View, CA 94043 (US)
(72) Inventor: GYORFI, Julius, Vernon Hills, Illinois 60061 (US); BUHRKE, Eric, Clarendon Hills, Illinois 60514 (US); LOPEZ, Juan, Chicago, Illinois 60661 (US); SCHULER, Francesca, Des Plaines, Illinois 60016 (US); YU, Han, Carpentersville, Illinois 60110 (US)
(74) Representative: Harden, Henry Simon

(56) References cited:
- Masayuki Kanbara ET AL: "Nara Palace Site Navigator: A Wearable Tour Guide System Based on Augmented Reality", Proc. 3rd CREST/ISWC Workshop on Advanced Computing and Communicating Techniques for Wearable Information Playing, 1 October 2004 (2004-10-01), XP055193067, Retrieved from the Internet: URL:http://www.researchgate.net/profile/Ma sanao_KOEDA/publication/242439851_Nara_Pal ace_Site_Navigator_A_Wearable_Tour_Guide_S ystem_Based_on_Augmented_Reality/links/53f 4b4870cf2888a7491147a.pdf [retrieved on 2015-06-02]

## Description

### Field of the Invention

The present invention relates generally to messaging, and in particular, to messaging within a mobile virtual and augmented reality system.

### Related Applications

This application is related to Application Serial No. 11/844538, entitled MOBILE VIRTUAL AND AUGMENTED REALITY SYSTEM, filed Aug. 24, 2007, Application Serial No. 11/858997, entitled MOBILE VIRTUAL AND AUGMENTED REALITY SYSTEM, filed Sept. 21, 2007, to Application Serial No. 11/930974 entitled MOBILE VIRTUAL AND AUGMENTED REALITY SYSTEM, filed Oct. 31, 2007, and to Application Serial No. 11/962139 entitled MOBILE VIRTUAL AND AUGMENTED REALITY SYSTEM, filed Dec. 21, 2007.

### Background of the Invention

Messaging systems have been used for years to let users send messages to each other. Currently, one of the simplest ways to send a message to another individual is to send a text message to the individual's cellular phone. Recently, it has been proposed to expand the capabilities of messaging systems so that users of the network may be given the option of leaving a specific message at a particular location. For example, in US6681107B2, SYSTEM AND METHOD OF ACCESSING AND RECORDING MESSAGES AT COORDINATE WAY POINTS, the author proposes that a user can merely push a button at a specific location causing the device to save the physical location. Then he can push a "record message" button which allows him to speak a message into his device. This message could be directions to the user's house from the specific location or any other personal message. The message is then uploaded to the network where it will become available to other network users. The person creating the message can designate whether the message is available to all users, only the persons stored in the memory of the user's device, a subset of the persons stored in memory, or even a single person.

Masayuki Kanbara ET AL, 'Nara Palace Site Navigator: A wearable Tour Guide System Based on Augmented Reality', 1 October 2004, discloses a wearable tour guide system using augmented reality techniques which can merge the real and virtual worlds.

In order to enhance the user's experience with the above-type of context-aware messaging system, the types of information provided to the users must go beyond simple text, images, and video. Therefore, a need exists for a method and apparatus for messaging within a context-aware messaging system that enhances the user's experience.

### Brief Description of the Drawings

FIG. 1 is a block diagram of a context-aware messaging system.
FIG. 2 illustrates an augmented reality scene.
FIG. 3 illustrates an augmented reality scene.
FIG. 4 is a block diagram of the server of FIG. 1.
FIG. 5 is a block diagram of the user device of FIG. 1.
FIG. 6 is a flow chart showing operation of the server of FIG. 1.
FIG. 7 is a flow chart showing operation of the user device of FIG. 1 when creating graffiti.
FIG. 8 is a flow chart showing operation of the user device of FIG. 1 when displaying graffiti.

### Detailed Description of the Drawings

In order to address the above-mentioned need, a method and apparatus for messaging within a mobile virtual and augmented reality system is provided herein. During operation a user can create "virtual graffiti" that will be left for a particular device to view as part of an augmented reality scene. The virtual graffiti will be assigned to either a particular physical location or a part of an object that can be mobile. The virtual graffiti is then uploaded to a network server, along with the location and individuals who are able to view the graffiti as part of an augmented reality scene.

When a device that is allowed to view the graffiti is near the location, the graffiti will be downloaded to the device and displayed as part of an augmented reality scene. To further enhance the user experience, the virtual graffiti can be dynamic, changing based on user's preferences. For example, virtual objects and their associated contents can be interpreted differently by each viewer. In doing so, each user would have a profile containing a set of personal preferences that would be defined by each user. These profiles would be consulted by a profile manager when downloading and processing messages to customize their appearances. If no customization is necessary, the profile manager stores the unmodified graffiti, otherwise the profile manager performs the necessary mapping to convert the original virtual object to the desired customized object.

In an augmented reality system, computer generated images, or "virtual images" may be embedded in or merged with the user's view of the real-world environment to enhance the user's interactions with, or perception of the environment. In the present invention, the user's augmented reality system merges any virtual graffiti messages with the user's view of the real world.

As an example, Ed could leave a message for his friends Tom and Joe at a bar suggesting they try the chili. Ed could specify that the message be inscribed on a virtual beer mug. Tom, who didn't customize his view, would see the message written on the beer mug whereas Joe, whose profile contains his preference for wine over beer, would see the same text message inscribed on a bottle of wine.

One example encompasses a method for receiving and displaying virtual graffiti as part of an augmented reality scene. The method comprises the steps of providing a location, receiving virtual graffiti in response to the step of providing the location, determining user preferences, and modifying the virtual graffiti based on the user preferences. Finally the modified virtual graffiti is displayed as part of an augmented reality scene.

Another example additionally encompasses a method for providing a device with virtual graffiti. The method comprises the steps of receiving virtual graffiti from a first device along with the location of the virtual graffiti, determining preferences for a second device, and modifying the virtual graffiti based on the preferences of the second device. A location of the second device is received and the second device is provided with the modified virtual graffiti when the location of the second device is near the location of the virtual graffiti.

Another example additionally encompasses an apparatus for receiving and displaying virtual graffiti as part of an augmented reality scene. The apparatus comprises a transmitter providing a location, a receiver receiving virtual graffiti in response to the step of providing the location, logic circuitry determining user preferences and modifying the virtual graffiti based on the user preferences, and an augmented reality system displaying the modified virtual graffiti as part of an augmented reality scene.

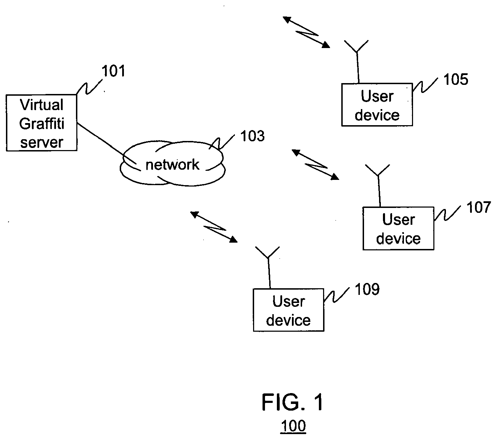

Turning now to the drawings, wherein like numerals designate like components, FIG. 1 is a block diagram of context-aware messaging system 100. System 100 comprises virtual graffiti server 101, network 103, and user devices 105-109. In one embodiment of the present invention, network 103 comprises a next-generation cellular network, capable of high data rates. Such systems include the enhanced Evolved Universal Terrestrial Radio Access (UTRA) or the Evolved Universal Terrestrial Radio Access Network (UTRAN) (also known as EUTRA and EUTRAN) within 3GPP, along with evolutions of communication systems within other technical specification generating organizations (such as 'Phase 2' within 3GPP2, and evolutions of IEEE 802.11, 802.16, 802.20, and 802.22). User devices 105-109 comprise devices capable of real-world imaging and providing the user with the real-world image augmented with virtual graffiti.

During operation, a user (e.g., a user operating user device 105) determines that he wishes to send another user virtual graffiti as part of an augmented reality scene. User device 105 is then utilized to create the virtual graffiti and associate the virtual graffiti with a location. The user also provides device 105 with a list of user(s) (e.g., user 107) that will be allowed to view the virtual graffiti. Device 105 then utilizes network 103 to provide this information to virtual graffiti server 101.

Server 101 periodically monitors the locations of all devices 105-109 along with their identities, and when a particular device is near a location where it is to be provided with virtual graffiti, server 101 utilizes network 103 to provide this information to the device. When a particular device is near a location where virtual graffiti is available for viewing, the device will notify the user, for example, by beeping. The user can then use the device to view the virtual graffiti as part of an augmented reality scene. Particularly, the virtual graffiti will be embedded in or merged with the user's view of the real-world. It should be noted that in alternate embodiments, no notification is sent to the user. It would then be up to the user to find any virtual graffiti in his environment.

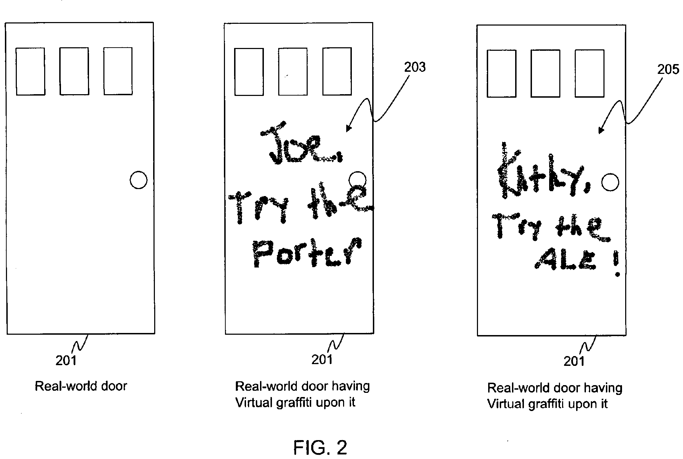

FIG. 2 illustrates an augmented reality scene. In this example, a user has created virtual graffiti 203 that states, "Joe, try the porter" and has attached this graffiti to the location of a door. As is shown in FIG. 2, the real-world door 201 does not have the graffiti existing upon it. However, if a user has privileges to view the virtual graffiti, then their augmented reality viewing system will show door 201 having graffiti 203 upon it. Thus, the virtual graffiti is *not* available to all users of system 100. The graffiti is only available to those designated able to view it (preferably by the individual who created the graffiti). Each device 105-109 will provide a unique augmented reality scene to their user. For example, a first user may view a first augmented reality scene, while a second user may view a totally different augmented reality scene. This is illustrated in FIG. 2 with graffiti 205 being different than graffiti 203. Thus, a first user, looking at door 201 may view graffiti 203, while a second user, looking at the same door 201 may view graffiti 205.

Although the above example was given with virtual graffiti 203 displayed on a particular object (i.e., door 201), in alternate embodiments of the present invention, virtual graffiti may be displayed unattached to any object. For example, graffiti may be displayed as floating in the air, or simply in front of a person's field of view. Additionally, although the virtual graffiti of FIG. 2 comprises text, the virtual graffiti may also comprise a "virtual object" such as images, audio and video clips, etc.

As discussed above, to further enhance the user experience, the virtual graffiti can be dynamic, changing based on user's preferences. For example, virtual objects and text can be interpreted differently by each viewer. In doing so, each user would have a profile containing a set of personal preferences that would be defined by each user. These profiles would be consulted when downloading and processing messages to customize their appearances. If no customization is necessary, the virtual graffiti is displayed as created, however, if customization is desired, the virtual graffiti is then customized.

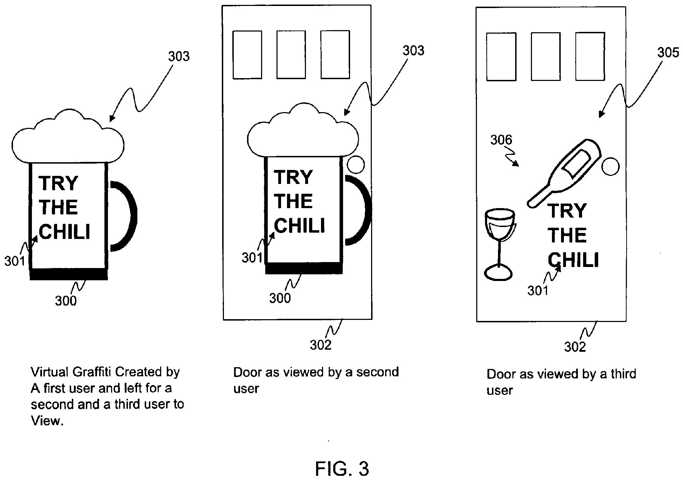

This is illustrated in FIG. 3. As shown in FIG. 3 a first user creates virtual graffiti 303. Virtual graffiti comprises at least two parts; a first virtual object 300 (a beer stein) along with virtual text 301 ("try the chili"). Virtual graffiti 303 is attached to door 302 and left for a second and a third user to view. The second user, who didn't customize his view, would see the virtual graffiti 303 with the same virtual object 300 and virtual text 301 as was created by the first user. However, the third user, whose profile contains his preference for wine over beer, has instructed his device to change all beer-related objects to wine related objects. The third user thus would see the same text 301 inscribed near or on top of a different virtual object 306 (e.g., a bottle of wine). Thus, the third user's device has replaced a portion of the original virtual graffiti.

As is evident, for any particular device 105-109 to be able to display virtual graffiti attached to a particular "real" object, the device must be capable of identifying the object's location, and then displaying the graffiti at the object's location. There are several methods for accomplishing this task. In one embodiment of the present invention, this is accomplished via the technique described in US2007/0024527, METHOD AND DEVICE FOR AUGMENTED REALITY MESSAGE HIDING AND REVEALING by the augmented reality system using vision recognition to attempt to match the originally created virtual graffiti to the user's current environment. For example, the virtual graffiti created by a user may be uploaded to server 101 along with an image of the graffiti's surroundings. The image of the graffiti's surroundings along with the graffiti can be downloaded to a user's augmented reality system, and when a user's surroundings match the image of the graffiti's surroundings, the graffiti will be appropriately displayed.

In another embodiment of the present invention the attachment of the virtual graffiti to a physical object is accomplished by assigning the physical coordinates of the physical object (assumed to be GPS, but could be some other system) to the virtual graffiti. The physical coordinates must be converted into virtual coordinates used by the 3D rendering system that will generate the augmented reality scene (one such 3D rendering system is the Java Mobile 3D Graphics, or M3G, API specifically designed for use on mobile devices). The most expedient way to accomplish the coordinate conversion is to set the virtual x coordinate to the longitude, the virtual y coordinate to the latitude, and the virtual z coordinate to the altitude thus duplicating the physical world in the virtual world by placing the origin of the virtual coordinate system at the center of the earth so that the point (0,0,0) would correspond the point where the equator and the prime meridian cross, projected onto the center of the earth. This would also conveniently eliminate the need to perform computationally expensive transformations from physical coordinates to virtual coordinates each time a virtual graffiti message is processed.

As previously mentioned, the physical coordinate system is assumed to be GPS, but GPS may not always be available (e.g., inside buildings). In such cases, any other suitable location system can be substituted, such as, for example, a WiFi-based indoor location system. Such a system could provide a location offset (xₒ,yₒ,zₒ) from a fixed reference point (xᵣ,yᵣ,zᵣ) whose GPS coordinates are known. Whatever coordinate system is chosen, the resultant coordinates will always be transformable into any other coordinate system.

After obtaining the virtual coordinates of the virtual graffiti, a viewpoint must be established for the 3D rendering system to be able to render the virtual scene. The viewpoint must also be specified in virtual coordinates and is completely dependent upon the physical position and orientation (i.e., viewing direction) of the device. If the viewpoint faces the virtual graffiti, the user will see the virtual graffiti from the viewpoint's perspective. If the user moves toward the virtual graffiti, the virtual graffiti will appear to increase in size. If the user turns 180 degrees in place to face away from the virtual graffiti, the virtual graffiti will no longer be visible and will not be displayed. All of these visual changes are automatically handled by the 3D rendering system based on the viewpoint.

Given a virtual scene containing virtual graffiti (at the specified virtual coordinates) and a viewpoint, the 3D rendering system can produce a view of the virtual scene unique to the user. This virtual scene must be overlaid onto a view of the real world to produce an augmented reality scene. One method to overlay the virtual scene onto a view of the real world from the mobile device's camera is to make use of an M3G background object which allows any image to be placed behind the virtual scene as its background. Using the M3G background, continuously updated frames from the camera can be placed behind the virtual scene, thus making the scene appear to be overlaid on the camera output.

Given the above information, a device's location is determined and sent to the server. The server determines what messages, if any, are in proximity to and available for the device. These messages are then downloaded by the device and processed. The processing involves transforming the physical locations of the virtual messages into virtual coordinates. The messages are then placed at those virtual coordinates. At the same time, the device's position and its orientation are used to define a viewpoint into the virtual world also in virtual coordinates. If the downloaded virtual message is visible from the given viewpoint, it is rendered on a mobile device's display on top of live video of the scene from the device's camera.

Thus, if the user wants to place a virtual message on the top of an object, the user must identify the location of the point on top of the object where the message will be left. In the simplest case, the user can place his device on the object and capture the location. He then sends this location with the virtual object and its associated content (e.g., a beer stein with the text message "try the porter" applied to the southward-facing side of the stein) to the server. The user further specifies that the message be available for a particular user. When the particular user arrives at the bar and is within range of the message, they will see the message from their location (and, therefore, their viewpoint). If they are looking toward the eastward-facing side of the message, they will see the stein, but will just be able to tell that there is some text message on the southern side. If a user wishes to read the text message, they will have to move their device (and thus their viewpoint) so that it is facing the southern side of the stein.

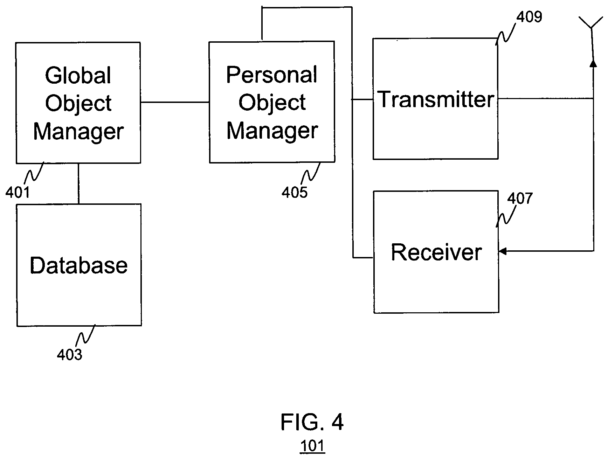

FIG. 4 is a block diagram of a server of FIG. 1. As is evident, server 101 comprises a global object manager 401, database 403, and personal object manager 405. During operation, global object manager 401 will receive virtual graffiti from any device 105-109 wishing to store graffiti on server 101. This information is preferably received wirelessly through receiver 407. Global object manager 401 is responsible for storing all virtual graffiti existing within system 100. Along with the virtual graffiti, global object manager 401 will also receive a location for the graffiti along with a list of devices that are allowed to display the graffiti. Again, this information is preferably received wirelessly through receiver 407. If the graffiti is to be attached to a particular item (moving or stationary), then the information needed for attaching the virtual graffiti to the object will be received as well. For the first embodiment, a digital representation of a stationary item's surroundings will be stored; for the second embodiment, the physical location of moving or stationary virtual graffiti will be stored. All of the above information is stored in database 403.

Although only one personal object manager 405 is shown in FIG. 4, it is envisioned that each user device will have its own personal object manager 405. Personal object manager 405 is intended to serve as an intermediary between its corresponding user device and global object manager 401. Personal object manager 405 will periodically receive a location for its corresponding user device. Once personal object manager 405 has determined the location of the device, personal object manager 405 will access global object manager 401 to determine if any virtual graffiti exists for the particular device at, or near the device's location. Personal object manager 405 filters all available virtual graffiti in order to determine only the virtual graffiti relevant to the particular device and the device's location. Personal object manager 405 then provides the device with the relevant information needed to display the virtual graffiti based on the location of the device, wherein the relevant virtual graffiti changes based on the identity and location of the device. This information will be provided to the device by instructing transmitter 409 to transmit the information wirelessly to the device.

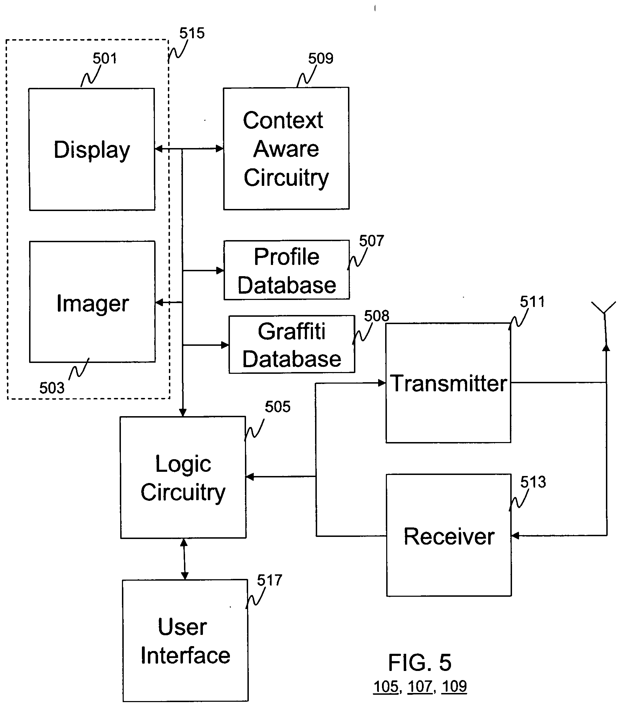

FIG. 5 is a block diagram of a user device of FIG. 1. As shown, the user device comprises augmented reality system 515, context-aware circuitry 509, profile database 507, graffiti database 508, logic circuitry 505, transmitter 511, receiver 513, and user interface 517. Context-aware circuitry 509 may comprise any device capable of generating a current context for the user device. For example, context-aware circuitry 509 may comprise a GPS receiver capable of determining a location of the user device. Alternatively, circuitry 509 may comprise such things as a clock, a thermometer capable of determining an ambient temperature, a biometric monitor such as a heart-rate monitor, an accelerometer, a barometer, ... , etc.

During operation, a user of the device creates virtual graffiti via user interface 517. The virtual graffiti preferably, but not necessarily, comprises at least two parts, a virtual object and content. The virtual object is a 3D object model that can be a primitive polygon or a complex polyhedron representing an avatar, for example. The content is preferably either text, pre-stored images such as clip art, pictures, photos, audio or video clips, ... , etc. The virtual object and its associated content comprise virtual graffiti that is stored in graffiti database 508. In one embodiment of the present invention, user interface 517 comprises an electronic tablet capable of obtaining virtual objects from graffiti database 508 and creating handwritten messages and/or pictures.

Once logic circuitry 505 receives the virtual graffiti from user interface 517 or graffiti database 508, logic circuitry 505 accesses context-aware circuitry 509 and determines a location where the graffiti was created (for stationary graffiti) or the device to which the virtual graffiti will be attached (for mobile graffiti). Logic circuitry 505 also receives a list of users with privileges to view the graffiti. This list is also provided to logic circuitry 505 through user interface 517.

In one embodiment of the present invention the virtual graffiti is associated with a physical object. When this is the case, logic circuitry 505 will also receive information required to attach the graffiti to an object. Finally, the virtual graffiti is provided to virtual graffiti server 101 by logic circuitry 505 instructing transmitter 511 to transmit the virtual graffiti, the location, the list of users able to view the graffiti, and if relevant, the information needed to attach the graffiti to an object. As discussed above, server 101 periodically monitors the locations of all devices 105-109 along with their identities, and when a particular device is near a location where it is to be provided with virtual graffiti, server 101 utilizes network 103 to provide this information to the device.

When a particular device is near a location where virtual graffiti is available for viewing, the device will notify the user, for example, by instructing user interface 517 to beep. The user can then use the device to view the virtual graffiti as part of an augmented reality scene. Thus, when the device of FIG. 5 is near a location where virtual graffiti is available for it, receiver 513 will receive the graffiti and the location of the graffiti from server 101. If relevant, receiver 513 will also receive information needed to attach the graffiti to a physical object. This information will be passed to logic circuitry 505.

As discussed above, each user device comprises profile database 507 containing a set of personal preferences that would be defined by each user. The personal preferences may be, for example:
∘ to replace an object of a first type with an object of a second type;
∘ to replace an object of a first size with a similar object of a second size;
∘ to replace an object of a first color scheme with a similar object of a second color scheme;
∘ to replace text of a first size with text of a second size for readability;
∘ to replace text of a first font with text of a second font for readability;
∘ to replace an image of a lower resolution with an image of a higher resolution;
∘ to replace an audio file of a first format (e.g., mp3) with an audio file of a second format (e.g., wav).

Personal preferences will be accessed by logic circuitry 505 (acting as a profile manager) when downloading and processing virtual graffiti in order to customize the graffiti's appearances. Any customized graffiti will be stored within graffiti database 508. If no customization is necessary, logic circuitry 505 simply stores the graffiti within graffiti database 508.

Logic circuitry 505 periodically accesses context-aware circuitry 509 to get updates to its location and provides these updates to server 101. When logic circuitry 505 determines that the virtual graffiti should be displayed, it will notify the user of the fact. The user can then use augmented reality system 515 to display the graffiti. More particularly, imager 503 will image the current background and provide this to display 501. Display 501 will also receive the virtual graffiti from graffiti database 508 and provide an image of the current background with the graffiti appropriately displayed. Thus, the virtual graffiti will be embedded in or merged with the user's view of the real-world.

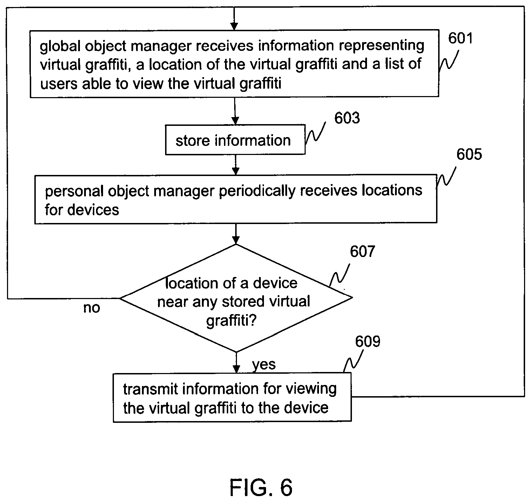

FIG. 6 is a flow chart showing operation of the server of FIG. 1. The logic flow begins at step 601 where global object manager 401 receives from a first device, information representing virtual graffiti, a location of the virtual graffiti, and a list of users able to view the virtual graffiti. It should be noted that the information received at step 601 may be updates to existing information. For example, when the virtual graffiti is "mobile", global object manager 401 may receive periodic updates to the location of the graffiti. Also, when the virtual graffiti is changing (e.g., a heart rate) global object manager 401 may receive periodic updates to the graffiti.

Continuing with the logic flow of FIG. 6, information is then stored in database 403 (step 603). As discussed above, personal object manager 405 will periodically receive locations (e.g., geographical regions) for all devices, including the first device (step 605) and determine if the location of a device is near any stored virtual graffiti (step 607). If, at step 607, personal object manager 405 determines that its corresponding device (second device) is near any virtual graffiti (which may be attached to the first device) that it is able to view, then the logic flow continues to step 609 where the graffiti and the necessary information for viewing the virtual graffiti (e.g., the location of the graffiti) is wirelessly transmitted to the second device via transmitter 409.

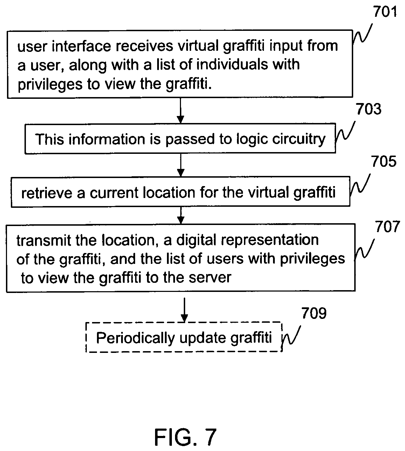

FIG. 7 is a flow chart showing operation of the user device of FIG. 1 when creating graffiti. In particular, the logic flow of FIG. 7 shows the steps necessary to create virtual graffiti and store the graffiti on server 101 for others to view. The logic flow begins at step 701 where user interface 517 receives virtual graffiti input from a user, along with a list of devices with privileges to view the graffiti. The virtual graffiti in this case may be input from a user via user interface 517, or may be graffiti taken from context-aware circuitry 509. For example, when context aware circuitry comprises a heart-rate monitor, the graffiti may be the actual heart rate taken from circuitry 509.

This information is passed to logic circuitry 505 (step 703). At step 705, logic circuitry 505 accesses context-aware circuitry 509 and retrieves a current location for the virtual graffiti. The logic flow continues to step 707 where logic circuitry 505 instructs transmitter 511 to transmit the location, a digital representation (e.g., a .jpeg or .gif image) of the graffiti, and the list of users with privileges to view the graffiti. It should be noted that in the 3D virtual object case, the digital representation could include URLs to 3D models and content (e.g., photos, music files, etc.). If the virtual graffiti is changing in appearance, the logic flow may continue to optional step 709 where logic circuitry 505 periodically updates the graffiti.

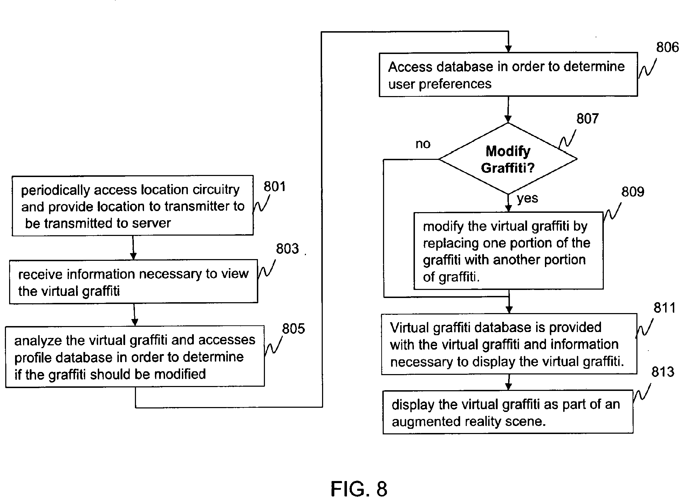

FIG. 8 is a flow chart showing operation of the user device of FIG. 1. In particular, the logic flow of FIG. 8 shows those steps necessary to display virtual graffiti. The logic flow begins at step 801 where logic circuitry 505 periodically accesses context-aware circuitry 509 and provides a location to transmitter 511 to be transmitted to server 101. In response to the step of providing the location, at step 803, receiver 513 receives information necessary to view virtual graffiti. As discussed above, this information may simply contain a gross location of the virtual graffiti along with a representation of the virtual graffiti. In other embodiments, this information may contain the necessary information to attach the virtual graffiti to an object. Such information may include a digital representation of the physical object, or a precise location of the virtual graffiti.

At step 805, logic circuitry 505 (acting as a profile manager) analyzes the virtual graffiti. Profile database 507 is then accessed in order to determine user preferences (step 806). At step 807, logic circuitry 505 determines if the graffiti should be modified, and if not the logic flow continues to step 811, otherwise the logic flow continues to step 809.

At step 809 logic circuitry 505 appropriately modifies the virtual graffiti based on the user preferences by replacing or modifying a portion of the graffiti. At step 811, logic circuitry 505 accesses virtual graffiti database 508 and stores the modified or unmodified virtual graffiti along with other information necessary to display the graffiti (e.g. the location of the graffiti). For the 3D case, this would include the device's orientation to specify a viewpoint. Finally, at step 813, display 501 (as part of augmented reality system 515) displays the modified or unmodified virtual graffiti as part of an augmented reality scene when the user is at the appropriate location.

While the invention has been particularly shown and described with reference to particular embodiments, it will be understood by those skilled in the art that various changes in form and details may be made therein without departing from the scope of the invention. For example, while the above description was provided with profile database 507 existing within user devices, one of ordinary skill in the art will recognize that database 507 may exist within server 101, with server 101 performing the necessary modification of the graffiti prior to providing it to any user. During this satiation, server 101 will receive virtual graffiti from a first device along with the location of the virtual graffiti and access database 507 to determine preferences for a second device. The virtual graffiti will then be modified by logic circuitry based on the preferences of the second device. The second device will be provided with the modified virtual graffiti when the location of the second device is near the location of the virtual graffiti. It is intended that such changes come within the scope of the following claims.

## Claims

1. A computer-implemented method for receiving and displaying virtual graffiti as part of an augmented reality scene, the method comprising the steps of:
providing, by a first user device, a real-world location of the first user device;
receiving, by the first user device, virtual graffiti (203), the virtual graffiti having been created by a second user device, the virtual graffiti having been associated with a real-world location by the second user device, and a viewpoint specified in virtual coordinates, the view point being dependent upon the physical position and orientation of the second user device, the virtual graffiti having been designated as only being able to be viewed on the first user device by the second user device,
wherein the step of receiving is in response to the step of providing the real-world location of the first user device and in response to the real-world location of the first user device being at or near the real-world location associated with the virtual graffiti;
determining, by the first user device, the position and orientation of the first user device;
defining, by the first user device, a viewpoint of the first user device based on the position and orientation of the first user device;
imaging, by an imager of the first user device, a scene at the real-world location of the first user device to produce an image of the real world;
if the virtual graffiti is visible from the viewpoint of the first user device, displaying, by a display of the first user device, the image and the virtual graffiti embedded in or merged with the image;
providing, by a third user device, a real-world location of the third user device, the real-world location being the same as the real-world location of the first user device;
receiving, by the third user device, other virtual graffiti (205), the other virtual graffiti having been created by the second user device, the other virtual graffiti having been associated with a real-world location by the second user device, and a viewpoint specified in virtual coordinates, the view point being dependent upon the physical position and orientation of the second user device, the other virtual graffiti having been designated as only being able to be viewed on the third user device by the second user device, wherein the step of receiving is in response to the step of providing the real-world location of the third user device and in response to the real-world location of the third user device being at or near the real-world location associated with the other virtual graffiti;
determining, by the third user device, the position and orientation of the third user device;
defining, by the third user device, a viewpoint of the third user device based on the position and orientation of the third user device;
imaging, by an imager of the third user device, a scene at the real-world location of the third user device to produce an image of the real world; and
if the other virtual graffiti is visible from the viewpoint of the third user device, displaying, by a display of the third user device, the image and the other virtual graffiti embedded in or merged with the image,
wherein the other virtual graffiti is different from the virtual graffiti.

2. The method of claim 1, wherein the step of receiving comprises receiving the real-world location associated with the virtual graffiti, and the step of displaying comprises displaying the virtual graffiti in the scene at a position corresponding to the real-world location associated with the virtual graffiti.

3. The method of any preceding claim, further comprising:
determining (806), by the first user device, user preferences for a user of the first user device; and
modifying (809), by the first user device, an appearance of the virtual graffiti based on the user preferences.

4. The method of claim 3, wherein the step of determining user preferences comprises the step of accessing a database (507) to determine the user preferences.

5. The method of claim 3 or 4, wherein the step of modifying the virtual graffiti comprises the step of replacing or modifying a portion of the virtual graffiti.

6. The method of claim 5, wherein the step of modifying the virtual graffiti comprises one of the following:
replacing an object of a first type with an object of a second type;
replacing an object of a first size with a similar object of a second size;
replacing an object of a first color scheme with a similar object of a second color scheme;
replacing text of a first size with text of a second size;
replacing text of a first font with text of a second font;
replacing an image of a lower resolution with an image of a higher resolution;
replacing an audio file of a first format with an audio file of a second format.

7. The method of any preceding claim, wherein the virtual graffiti comprises an object and content.

8. The method of claim 7, wherein the content comprises text, images, audio, or video clips.

9. The method of any preceding claim, wherein overlaying the virtual scene onto the user's view of a real-world environment includes using an API for placing an image behind a virtual scene as its background to place continuously updated frames from a camera behind the virtual scene.

10. The method of any preceding claim, further comprising visually changing a size of the virtual graffiti based on a proximity of the first user device to the real-world location.

11. An apparatus configured to implement a method according to any preceding claim.

## Patentansprüche

1. Computerimplementiertes Verfahren zum Empfangen und Anzeigen eines virtuellen Graffitis als Teil einer Szene erweiterter Realität, wobei das Verfahren die folgenden Schritte umfasst:
Bereitstellen, durch eine erste Benutzervorrichtung, eines realen Standorts der ersten Benutzervorrichtung;
Empfangen, durch die erste Benutzervorrichtung, eines virtuellen Graffitis (203), wobei das virtuelle Graffiti durch eine zweite Benutzervorrichtung erzeugt wurde, wobei das virtuelle Graffiti durch die zweite Benutzervorrichtung einem realen Standort zugeordnet wurde, und eines Blickpunkts, der in virtuellen Koordinaten spezifiziert ist, wobei der Blickpunkt von der physischen Position und Ausrichtung der zweiten Benutzervorrichtung abhängig ist, wobei das virtuelle Graffiti als nur auf der ersten Benutzervorrichtung betrachtbar durch die zweite Benutzervorrichtung gekennzeichnet ist, wobei der Schritt des Empfangens als Reaktion auf den Schritt des Bereitstellens des realen Standorts der ersten Benutzervorrichtung und als Reaktion darauf, dass sich der reale Standort der ersten Benutzervorrichtung an oder in der Nähe des realen Standorts befindet, der dem virtuellen Graffiti zugeordnet ist, erfolgt;
Bestimmen, durch die erste Benutzervorrichtung, der Position und Ausrichtung der ersten Benutzervorrichtung;
Definieren, durch die erste Benutzervorrichtung, eines Blickpunkts der ersten Benutzervorrichtung basierend auf der Position und Ausrichtung der ersten Benutzervorrichtung;
Abbilden einer Szene an dem realen Standort der ersten Benutzervorrichtung durch einen Bildgeber der ersten Benutzervorrichtung, um ein Bild der realen Welt zu erzeugen;
falls das virtuelle Graffiti aus dem Blickpunkt der ersten Benutzervorrichtung sichtbar ist, Anzeigen, durch eine Anzeige der ersten Benutzervorrichtung, des Bildes und des virtuellen Graffitis, das in das Bild eingebettet oder mit dem Bild zusammengeführt ist;
Bereitstellen, durch eine dritte Benutzervorrichtung, eines realen Standorts der dritten Benutzervorrichtung, wobei der reale Standort gleich dem realen Standort der ersten Benutzervorrichtung ist;
Empfangen, durch die dritte Benutzervorrichtung, eines anderen virtuellen Graffitis (205), wobei das andere virtuelle Graffiti durch die zweite Benutzervorrichtung erzeugt wurde, wobei das andere virtuelle Graffiti durch die zweite Benutzervorrichtung einem realen Standort zugeordnet wurde, und eines Blickpunkts, der in virtuellen Koordinaten spezifiziert ist, wobei der Blickpunkt von der physischen Position und Ausrichtung der zweiten Benutzervorrichtung abhängig ist, wobei das andere virtuelle Graffiti als nur auf der dritten Benutzervorrichtung betrachtbar durch die zweite Benutzervorrichtung gekennzeichnet ist, wobei der Schritt des Empfangens als Reaktion auf den Schritt des Bereitstellens des realen Standorts der dritten Benutzervorrichtung und als Reaktion darauf, dass sich der reale Standort der dritten Benutzervorrichtung an oder in der Nähe des realen Standorts befindet, der dem anderen virtuellen Graffiti zugeordnet ist, erfolgt;
Bestimmen, durch die dritte Benutzervorrichtung, der Position und Ausrichtung der dritten Benutzervorrichtung;
Definieren, durch die dritte Benutzervorrichtung, eines Blickpunkts der dritten Benutzervorrichtung basierend auf der Position und Ausrichtung der dritten Benutzervorrichtung;
Abbilden einer Szene an dem realen Standort der dritten Benutzervorrichtung durch einen Bildgeber der dritten Benutzervorrichtung, um ein Bild der realen Welt zu erzeugen; und
falls das andere virtuelle Graffiti aus dem Blickpunkt der dritten Benutzervorrichtung sichtbar ist, Anzeigen, durch eine Anzeige der dritten Benutzervorrichtung, des Bildes und des anderen virtuellen Graffitis, das in das Bild eingebettet oder mit dem Bild zusammengeführt ist,
wobei sich das andere virtuelle Graffiti von dem virtuellen Graffiti unterscheidet.

2. Verfahren nach Anspruch 1, wobei der Schritt des Empfangens Empfangen des realen Standorts, der dem virtuellen Graffiti zugeordnet ist, umfasst, und der Schritt des Anzeigens Anzeigen des virtuellen Graffitis in der Szene an einer Position umfasst, die dem realen Standort entspricht, der dem virtuellen Graffiti zugeordnet ist.

3. Verfahren nach einem der vorhergehenden Ansprüche, ferner umfassend:
Bestimmen (806), durch die erste Benutzervorrichtung, von Benutzerpräferenzen für einen Benutzer der ersten Benutzervorrichtung; und
Modifizieren (809), durch die erste Benutzervorrichtung, eines Erscheinungsbildes des virtuellen Graffitis basierend auf den Benutzerpräferenzen.

4. Verfahren nach Anspruch 3, wobei der Schritt des Bestimmens von Benutzerpräferenzen den Schritt eines Zugreifens auf eine Datenbank (507), um die Benutzerpräferenzen zu bestimmen, umfasst.

5. Verfahren nach Anspruch 3 oder 4, wobei der Schritt des Modifizierens des virtuellen Graffitis den Schritt eines Ersetzens oder Modifizierens eines Teils des virtuellen Graffitis umfasst.

6. Verfahren nach Anspruch 5, wobei der Schritt des Modifizierens des virtuellen Graffitis eines der Folgenden umfasst:
Ersetzen eines Objekts eines ersten Typs durch ein Objekt eines zweiten Typs;
Ersetzen eines Objekts einer ersten Größe durch ein ähnliches Objekt einer zweiten Größe;
Ersetzen eines Objekts eines ersten Farbschemas durch ein ähnliches Objekt eines zweiten Farbschemas;
Ersetzen von Text einer ersten Größe durch Text einer zweiten Größe;
Ersetzen von Text einer ersten Schriftart durch Text einer zweiten Schriftart;
Ersetzen eines Bildes mit einer niedrigeren Auflösung durch ein Bild mit einer höheren Auflösung;
Ersetzen einer Audiodatei eines ersten Formats durch eine Audiodatei eines zweiten Formats.

7. Verfahren nach einem der vorhergehenden Ansprüche, wobei das virtuelle Graffiti ein Objekt und einen Inhalt umfasst.

8. Verfahren nach Anspruch 7, wobei der Inhalt Text, Bilder, Audio- oder Videoclips umfasst.

9. Verfahren nach einem der vorhergehenden Ansprüche, wobei ein Überlagern der virtuellen Szene über den Anblick des Benutzers einer realen Umgebung Verwenden einer API zum Platzieren eines Bildes hinter einer virtuellen Szene als ihren Hintergrund, um kontinuierlich aktualisierte Frames von einer Kamera hinter der virtuellen Szene zu platzieren, umfasst.

10. Verfahren nach einem der vorhergehenden Ansprüche, ferner visuelles Ändern einer Größe des virtuellen Graffitis basierend auf einer Nähe der ersten Benutzervorrichtung zu dem realen Standort umfassend.

11. Einrichtung, dazu konfiguriert, ein Verfahren nach einem der vorhergehenden Ansprüche zu implementieren.

## Revendications

1. Procédé informatisé de réception et d'affichage de graffiti virtuel dans le cadre d'une scène de réalité augmentée, le procédé comprenant les étapes :
de fourniture, par un premier dispositif utilisateur, d'un emplacement réel du premier dispositif utilisateur ;
de réception, par le premier dispositif utilisateur, de graffiti virtuel (203), le graffiti virtuel ayant été créé par un deuxième dispositif utilisateur, le graffiti virtuel ayant été associé à un emplacement réel par le deuxième dispositif utilisateur, et à un point de vue spécifié dans des coordonnées virtuelles, le point de vue étant dépendant de la position et de l'orientation physiques du deuxième dispositif utilisateur, le graffiti virtuel ayant été conçu comme pouvant uniquement être vu sur le premier dispositif utilisateur par le deuxième dispositif utilisateur, dans lequel l'étape de réception est en réponse à l'étape de fourniture de l'emplacement réel du premier dispositif utilisateur et en réponse à l'emplacement réel du premier dispositif utilisateur étant au niveau ou à proximité de l'emplacement réel associé au graffiti virtuel ;
de détermination, par le premier dispositif utilisateur, de la position et l'orientation du premier dispositif utilisateur ;
de définition, par le premier dispositif utilisateur, d'un point de vue du premier dispositif utilisateur sur la base de la position et de l'orientation du premier dispositif utilisateur ;
d'imagerie, par un imageur du premier dispositif utilisateur,
d'une scène à l'emplacement réel du premier dispositif utilisateur pour produire une image du monde réel ;
si le graffiti virtuel est visible du point de vue du premier dispositif utilisateur, d'affichage, par un écran du premier dispositif utilisateur, de l'image et du graffiti virtuel intégré dans ou fusionné avec l'image ;
de fourniture, par un troisième dispositif utilisateur, d'un emplacement réel du troisième dispositif utilisateur,
l'emplacement réel étant le même que l'emplacement réel du premier dispositif utilisateur ;
de réception, par le troisième dispositif utilisateur, d'un autre graffiti virtuel (205), l'autre graffiti virtuel ayant été créé par un deuxième dispositif utilisateur, l'autre graffiti virtuel ayant été associé à un emplacement réel par le deuxième dispositif utilisateur, et d'un point de vue spécifié dans des coordonnées virtuelles, le point de vue étant dépendant de la position et de l'orientation physiques du deuxième dispositif utilisateur, l'autre graffiti virtuel ayant été conçu comme pouvant uniquement être vu sur le troisième dispositif utilisateur par le deuxième dispositif utilisateur, dans lequel l'étape de réception est en réponse à l'étape de fourniture de l'emplacement réel du troisième dispositif utilisateur et en réponse à l'emplacement réel du troisième dispositif utilisateur étant au niveau ou à proximité de l'emplacement réel associé à l'autre graffiti virtuel ;
de détermination, par le troisième dispositif utilisateur, de la position et l'orientation du troisième dispositif utilisateur ;
de définition, par le troisième dispositif utilisateur, d'un point de vue du troisième dispositif utilisateur sur la base de la position et de l'orientation du troisième dispositif utilisateur ;
d'imagerie, par un imageur du troisième dispositif utilisateur, d'une scène à l'emplacement réel du troisième dispositif utilisateur pour produire une image du monde réel ; et
si l'autre graffiti virtuel est visible du point de vue du troisième dispositif utilisateur, d'affichage, par un écran du troisième dispositif utilisateur, de l'image et de l'autre graffiti virtuel intégré dans ou fusionné avec l'image ;
dans lequel l'autre graffiti virtuel est différent du graffiti virtuel.

2. Procédé selon la revendication 1, dans lequel l'étape de réception comprend la réception de l'emplacement réel associé au graffiti virtuel, et l'étape d'affichage comprend l'affichage du graffiti virtuel dans la scène à une position correspondant à l'emplacement réel associé au graffiti virtuel.

3. Procédé selon une quelconque revendication précédente, comprenant également :
la détermination (806), par le premier dispositif utilisateur, des préférences de l'utilisateur pour un utilisateur du premier dispositif utilisateur ; et
la modification (809), par le premier dispositif utilisateur, d'une apparence du graffiti virtuel sur la base des préférences de l'utilisateur.

4. Procédé selon la revendication 3, dans lequel l'étape de détermination des préférences de l'utilisateur comprend l'étape d'accès à une base de données (507) pour déterminer les préférences de l'utilisateur.

5. Procédé selon la revendication 3 ou 4, dans lequel l'étape de modification du graffiti virtuel comprend l'étape de remplacement ou de modification d'une partie du graffiti virtuel.

6. Procédé selon la revendication 5, dans lequel l'étape de modification du graffiti virtuel comprend l'une des étapes suivantes :
le remplacement d'un objet d'un premier type par un objet d'un second type ;
le remplacement d'un objet d'une première taille par un objet similaire d'une seconde taille ;
le remplacement d'un objet d'un premier jeu de couleurs par un objet similaire d'un second jeu de couleurs ;
le remplacement d'un texte d'une première taille par un texte d'une seconde taille ;
le remplacement d'un texte d'une première police par un texte d'une seconde police ;
le remplacement d'une image de résolution inférieure par une image de résolution supérieure ;
le remplacement d'un fichier audio d'un premier format par un fichier audio d'un second format.

7. Procédé selon une quelconque revendication précédente, dans lequel le graffiti virtuel comprend un objet et un contenu.

8. Procédé selon la revendication 7, dans lequel le contenu comprend du texte, des images, des séquences audio ou vidéo.

9. Procédé selon une quelconque revendication précédente, dans lequel la superposition de la scène virtuelle sur la vue d'un environnement réel de l'utilisateur comporte l'utilisation d'une API pour le placement d'une image derrière une scène virtuelle comme arrière-plan pour placer des trames continuellement mises à jour à partir d'une caméra derrière la scène virtuelle.

10. Procédé selon une quelconque revendication précédente, comprenant également la modification visuelle d'une taille du graffiti virtuel sur la base de la proximité du premier dispositif utilisateur par rapport à l'emplacement réel.

11. Appareil configuré pour mettre en œuvre un procédé selon une quelconque revendication précédente.
